# FASCICULE DE BREVET EUROPEEN

(11) **EP 2 937 027 B1**
(45) Date de publication et mention de la délivrance du brevet: **01.03.2017**
(21) Numéro de dépôt: 15163874.9
(22) Date de dépôt: 16.04.2015
(51) Int. Cl.: A47J 43/07

(54) **APPAREIL ÉLECTROMÉNAGER DE PRÉPARATION CULINAIRE COMPORTANT UN RÉCIPIENT AMOVIBLE POUVANT ÊTRE DISPOSÉ SUR UN BOITIER PAR UN SIMPLE MOUVEMENT DE TRANSLATION**
ELEKTROHAUSHALTSGERÄT ZUR ESSENSZUBEREITUNG, DAS EINEN ENTFERNBAREN BEHÄLTER UMFASST, DER DURCH EINE EINFACHE VERSCHIEBUNGSBEWEGUNG AUF EINEM GEHÄUSE ABGESTELLT WERDEN KANN
HOUSEHOLD COOKING APPLIANCE COMPRISING A REMOVABLE CONTAINER WHICH CAN BE ARRANGED ON A HOUSING BY A SIMPLE TRANSLATION MOVEMENT

(30) Priorité: 25.04.2014 FR 1453778
(43) Date de publication de la demande: 28.10.2015
(73) Titulaire: SEB S.A., 69130 Ecully (FR)
(72) Inventeur: Lemarie, Christophe, 53470 MARTIGNE SUR MAYENNE (FR); Maunoury, Damien, 53470 CHALONS DU MAINE (FR)
(74) Mandataire: Bourrières, Patrice

(56) Documents cités:
- EP-A1- 2 368 469
- FR-A1- 2 908 620
- US-A1- 2005 194 484

## Description

La présente invention se rapporte au domaine technique général des appareils électroménagers de préparation culinaire comportant un boîtier renfermant un moteur et comprenant un récipient amovible pouvant être disposé sur le boîtier par un simple mouvement de translation verticale, le récipient comprenant un outil de travail destiné à être entraîné en rotation par le moteur et comportant une embase comprenant une jupe périphérique venant s'emboîter sur des reliefs de centrage ménagés sur le boîtier.

Il est connu, de la demande de brevet FR 2 908 620, un appareil de préparation culinaire comportant un boîtier moteur sur lequel peut s'engager un récipient par un simple mouvement de translation verticale. Dans ce document, l'appareil comporte des moyens de verrouillage élastiques permettant d'immobiliser le récipient sur le boîtier moteur et d'éviter notamment qu'il ne se soulève sous l'effet des moyens de rappel de la commande de sécurité.

Cependant, un tel appareil présente l'inconvénient de ne pas permettre à l'utilisateur de visualiser le bon engagement des moyens de verrouillage. De plus, les moyens de verrouillage divulgués dans ce document ne permettent pas de garantir un maintien ferme du récipient sur le boîtier.

Aussi, un but de la présente invention est de proposer un appareil électroménager de préparation culinaire remédiant à ces inconvénients et qui soit simple et économique à réaliser. Un autre but de la présente invention est de proposer un appareil procurant une grande ergonomie d'utilisation.

A cet effet, l'invention se rapporte à un appareil électroménager de préparation culinaire comportant un boîtier renfermant un moteur et un récipient amovible pouvant être disposé, dans une position de fonctionnement sur le boîtier, par un simple mouvement de translation verticale, le récipient comprenant un outil de travail destiné à être entraîné en rotation par le moteur et comportant une embase comprenant une jupe périphérique venant s'emboîter sur un ou plusieurs reliefs de centrage ménagés sur le boîtier, caractérisé en ce que le boîtier comporte au moins un bossage de maintien ménagé sur une paroi externe d'un des reliefs de centrage, le bossage venant s'engager dans une ouverture ménagée sur la jupe périphérique de l'embase pour immobiliser le récipient en position sur le boîtier selon la direction verticale d'engagement.

On obtient ainsi un appareil dans lequel le maintien du récipient sur le boîtier est réalisé efficacement par des moyens simples à mettre en oeuvre, la coopération du bossage avec l'ouverture de la jupe périphérique présentant l'avantage d'être parfaitement visible par l'utilisateur de sorte que ce dernier est visuellement informé du bon engagement du récipient sur le boîtier.

Par une mise en place du récipient sur le boîtier par un simple mouvement de translation verticale, on entend une mise en place du récipient dans une position de fonctionnement de l'appareil ne nécessitant pas de rotation du récipient sur le boîtier, pour assurer son verrouillage et son immobilisation sur le boîtier, tel que cela est habituellement le cas avec une liaison de type baïonnette.

Selon une autre caractéristique de l'invention, les reliefs de centrage comportent un premier bossage et un deuxième bossage de maintien disposés sur deux faces distinctes du boîtier, les premier et deuxième bossages venant s'engager dans des ouvertures correspondantes de la jupe périphérique de l'embase du récipient.

Une telle caractéristique permet d'améliorer encore le maintien du récipient sur le boîtier.

Selon une autre caractéristique de l'invention, le premier bossage est porté par une languette prévue pour se déformer élastiquement lorsqu'une pression est exercée sur le premier bossage.

Une telle caractéristique permet de limiter l'effort pour parvenir à l'engagement et au désengagement du premier bossage dans l'ouverture.

Selon une autre caractéristique de l'invention, la languette élastique est réalisée dans une pièce qui est rapportée dans une ouverture de la paroi externe du relief de centrage.

Une telle caractéristique permet de réaliser la languette élastique dans un matériau différent de celui utilisé pour le boîtier, possédant par exemple une meilleure résistance à la fatigue. Une telle caractéristique permet également de simplifier le procédé de fabrication.

Selon encore une autre caractéristique de l'invention, le deuxième bossage est porté par une paroi présentant une plus grande rigidité que la languette supportant le premier bossage.

Une telle caractéristique présente l'avantage de créer un point d'ancrage au niveau du deuxième bossage présentant une plus grande résistance à l'engagement et au désengagement que le point d'ancrage réalisé par l'engagement du premier bossage, permettant ainsi d'améliorer la fermeté du maintien du récipient sur le boîtier.

Selon encore une autre caractéristique de l'invention, le deuxième bossage est réalisé directement sur la paroi externe du relief de centrage, cette dernière étant dépourvue de découpe pour faciliter la déformation élastique de la paroi.

Une telle solution technique présente l'avantage d'être simple et économique à mettre en oeuvre. Elle présente également l'avantage de ne pas dégrader de façon importante l'esthétique du boîtier.

Selon une autre caractéristique de l'invention, le boîtier comporte une commande de sécurité qui est ramenée dans une position de repos par des moyens de rappel, la commande de sécurité étant disposée plus près du deuxième bossage que du premier bossage.

Une telle caractéristique présente l'avantage de disposer la commande de sécurité au voisinage du bossage où le récipient est maintenu le plus fermement en position, permettant ainsi de garantir un meilleur positionnement du récipient sur le boîtier et une bonne activation de la commande de sécurité.

Selon une autre caractéristique de l'invention, le premier bossage est porté par une face externe d'un relief de centrage s'étendant le long de la face arrière du boîtier et le deuxième bossage est porté par une face externe d'un relief de centrage s'étendant le long de la face avant du boîtier, les faces externes des reliefs de centrage venant s'emboîter dans la jupe périphérique de l'embase du récipient lorsque le récipient est disposé sur le boîtier.

Selon une autre caractéristique de l'invention, le récipient peut être disposé sur le boîtier selon plusieurs orientations prédéterminées.

Une telle caractéristique simplifie la mise en place du récipient sur le boîtier et permet notamment, lorsque le récipient est pourvu d'une poignée, d'orienter la poignée du récipient selon la direction la plus ergonomique pour l'utilisateur, selon que ce dernier soit droitier ou gaucher.

Selon une autre caractéristique de l'invention, la jupe périphérique comporte un nombre d'ouvertures supérieur au nombre de bossages, les ouvertures de la jupe périphérique venant soit en regard du bossage, soit en regard d'un passage pour la circulation d'air, lorsque le récipient est disposé sur le boîtier selon l'une quelconque des orientations permises par les reliefs de centrage.

Une telle caractéristique permet d'avoir, par les ouvertures inoccupées par les bossages, une circulation d'air participant au refroidissement de l'appareil.

Selon une autre caractéristique de l'invention, le passage pour la circulation de l'air est constitué par un espace ménagé entre les reliefs de centrage.

Selon une autre caractéristique de l'invention, l'embase du récipient présente une section transversale sensiblement carrée, l'embase pouvant être disposée sur le boîtier selon quatre orientations distinctes décalées l'une par rapport à l'autre de 90°.

Selon une autre caractéristique de l'invention, l'embase comporte une ouverture sur chacune des quatre faces de la jupe périphérique, deux des ouvertures recevant les premier et deuxième bossages lorsque le récipient est disposé sur le boîtier, les deux autres ouvertures venant en regard d'un espace ménagé entre les deux reliefs de centrage pour permettre la circulation d'un flux d'air contribuant au refroidissement du moteur.

Selon une autre caractéristique de l'invention, les ouvertures présentent la forme d'une fente, le bossage présentant la forme d'un bourrelet possédant une forme adaptée pour s'introduire dans les ouvertures.

Selon une autre caractéristique de l'invention, le bossage s'introduisant dans la fente s'étend sur une hauteur comprise entre 1 et 3 mm et présente une largeur supérieure à 1 cm et préférentiellement une largeur de l'ordre de 3 cm.

Une telle caractéristique permet d'obtenir à la fois un bon maintien du récipient et une bonne perception visuelle des moyens de maintien du récipient.

Selon une autre caractéristique de l'invention, la jupe périphérique est réalisée dans un matériau transparent.

Une telle caractéristique permet d'améliorer encore la visibilité sur l'engagement des bossages.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective, de trois quart avant, d'un appareil électroménager de préparation culinaire selon un mode particulier de réalisation de l'invention, le récipient étant accouplé au boîtier moteur ;
- la figure 2 est une vue en perspective, de trois quart arrière, de l'appareil de préparation culinaire de la figure 1, le récipient étant désaccouplé du boîtier moteur ;
- la figure 3 est une vue en perspective du dessus du boîtier moteur de l'appareil de préparation culinaire de la figure 1 ;
- la figure 4 est une vue de côté de la face arrière du boîtier de la figure 3 ;
- la figure 5 est une vue en perspective du dessous du récipient de l'appareil de la figure 1 ;
- la figure 6 est une vue en coupe longitudinale de l'appareil de la figure 1 ;
- les figures 7A et 7B représentent des vues en perspective de la pièce à déformation élastique supportant le bossage disposé sur la face arrière du boîtier.

Seuls les éléments nécessaires à la compréhension de l'invention ont été représentés. Pour faciliter la lecture des dessins, les mêmes éléments portent les mêmes références d'une figure à l'autre.

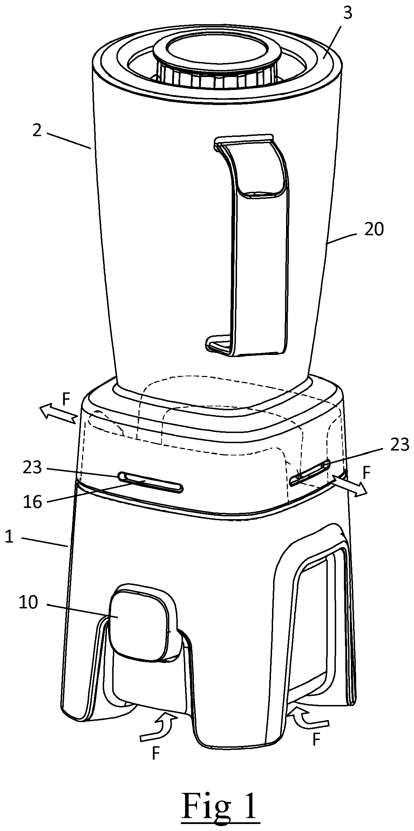

La figure 1 illustre un appareil électroménager de préparation culinaire comportant un boîtier 1 moteur et un récipient 2 prévu pour être mis en place sur le boîtier 1 moteur selon plusieurs positions angulaires, le récipient 2 comprenant un couvercle 3 amovible et étant pourvu d'une poignée de préhension.

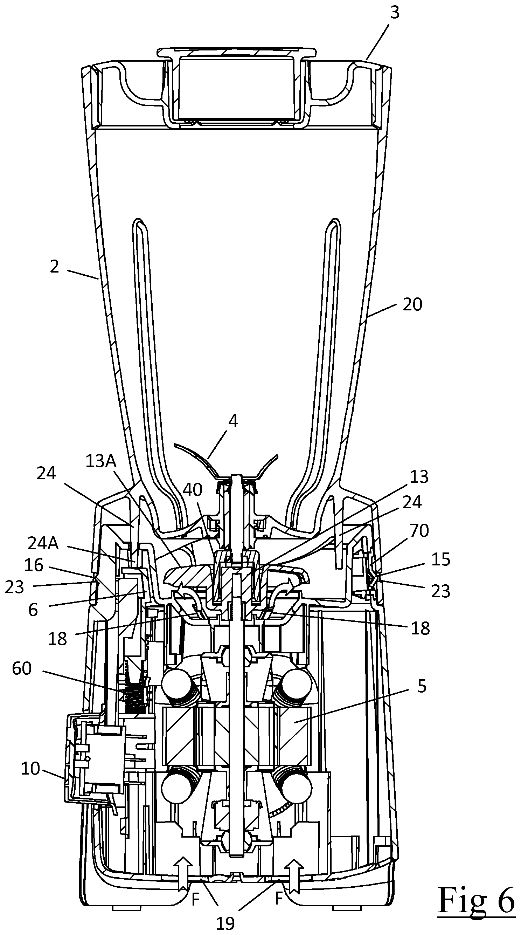

Le récipient 2 est préférentiellement réalisé en matière plastique, par exemple par un procédé de moulage, et comporte une enveloppe 20 transparente définissant le volume utile du récipient 2 ainsi qu'un fond, visible sur la figure 6, supportant classiquement un outil de travail 4 destiné à être entraîné en rotation par un moteur 5, visible sur la figure 6, intégré dans le boîtier 1.

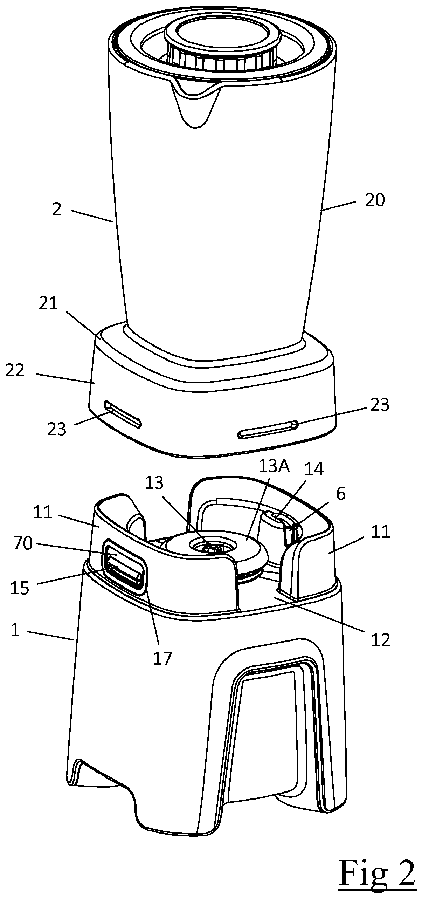

Conformément aux figures 1 à 3, le boîtier 1 présente une section transversale sensiblement carrée avec des coins arrondis et comporte une face avant munie d'un bouton de commande 10 permettant de contrôler le fonctionnement du moteur 5, le boîtier 1 comprenant une extrémité supérieure munie d'un socle de réception sur lequel le récipient 2 peut venir reposer.

De manière préférentielle, le socle de réception comporte deux reliefs de centrage 11 sur lesquels le récipient 2 peut s'engager verticalement selon quatre positions angulaires décalées l'une par rapport à l'autre de 90°, le récipient 2 comprenant une embase 21 élargie comprenant une jupe périphérique 22 de section sensiblement carrée venant s'emboîter sur les reliefs de centrage 11 en épousant la forme de ces derniers.

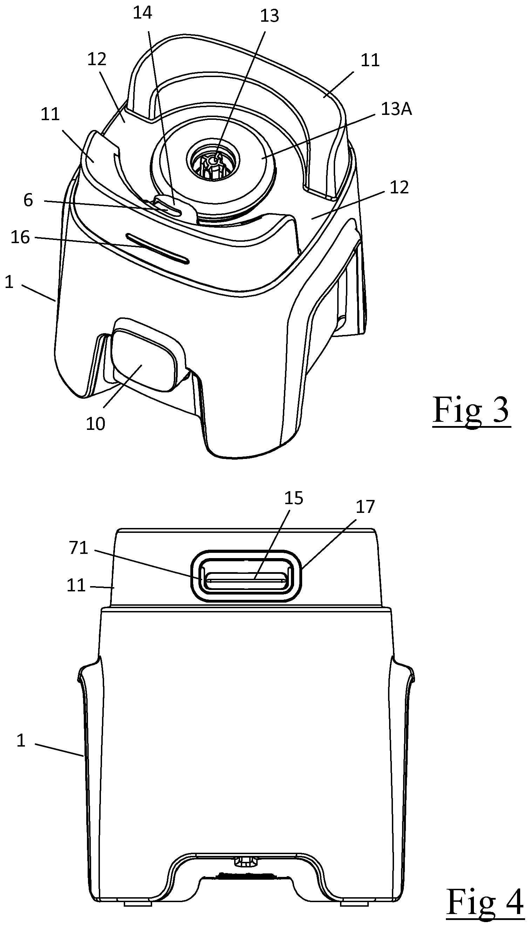

Comme on peut le voir sur la figure 3, l'un des deux reliefs de centrage 11 s'étend le long de la face avant du boîtier 1, l'autre relief de centrage 11 s'étendant le long de la face arrière du boîtier 1, les deux reliefs de centrage 11 étant séparés à leur extrémité longitudinale par un espace 12, d'une largeur de l'ordre de 35 mm.

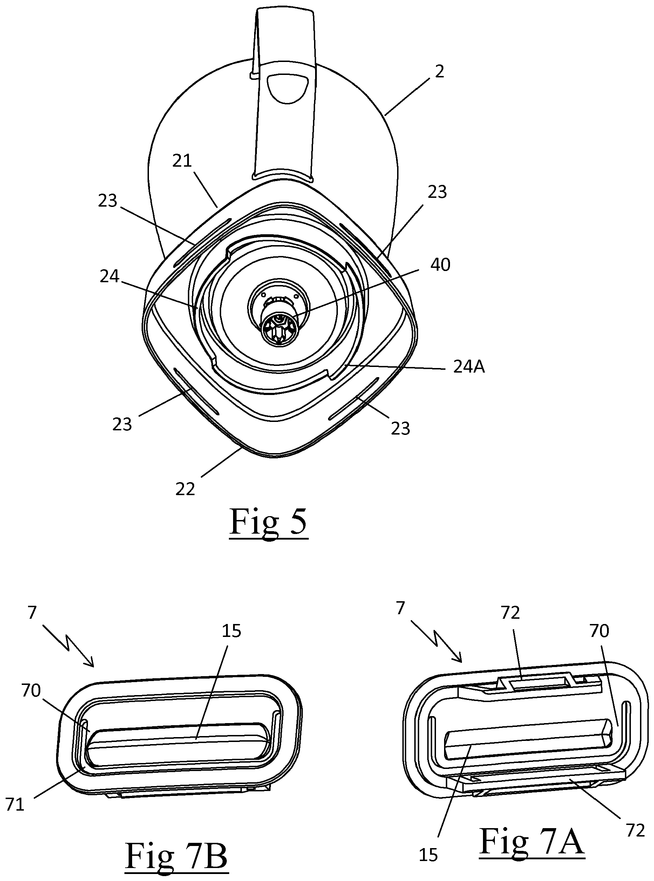

Les deux reliefs de centrage 11 présentent une paroi interne de forme circulaire qui délimitent entre elles une cavité cylindrique recevant un entraîneur 13 rotatif solidaire de l'arbre de sortie du moteur 5, l'outil de travail 4 comportant un arbre traversant le fond du récipient 2 dont l'extrémité inférieure est munie d'une douille 40, visible sur la figure 5, venant s'accoupler sur l'entraîneur 13 lorsque le récipient 2 est correctement disposé sur le boîtier 1.

Le socle de réception comporte également un plot 14 disposé en bordure du relief de centrage 11 s'étendant le long de la face avant, le plot 14 comportant une fente donnant accès à une commande de sécurité 6, visible sur les figures 3 et 6, pouvant se déplacer verticalement à l'intérieur du boîtier 1 moteur à l'encontre d'un ressort 60 de rappel pour venir actionner, de manière connue en soi, un interrupteur de sécurité disposé sur le circuit d'alimentation du moteur 5.

Le récipient 2 est immobilisé sur le socle de réception au moyen d'un premier bossage 15 de maintien ménagé sur une paroi externe du relief de centrage 11 s'étendant le long de la face arrière du boîtier 1 et d'un deuxième bossage 16 de maintien ménagé sur une paroi externe du relief de centrage 11 s'étendant le long de la face avant du boîtier 1, les premier et deuxième bossages 15, 16 venant s'introduire en force dans des ouvertures 23 ménagées sur la jupe périphérique 22 de l'embase 21 du récipient 2.

Comme on peut mieux le voir sur la figure 5, chaque face latérale de la jupe périphérique 22 comporte une ouverture 23 pouvant recevoir le premier ou deuxième bossage 15, 16 et le récipient 2 comporte une couronne 24 annulaire, s'étendant à l'intérieur de la jupe périphérique 22, comprenant des cames 24A venant actionner la commande de sécurité 6 lorsque le récipient 2 est disposé sur le boîtier 1 selon l'une quelconque des quatre positions angulaires autorisées.

De manière préférentielle, le premier bossage 15 est porté par une languette 70 prévue pour se déformer élastiquement et le deuxième bossage 16 est ménagé directement sur la paroi externe du relief de centrage 11 située sur la face avant du boîtier sans qu'aucune découpe ne soit prévue autour du deuxième bossage 16 pour favoriser la déformation de la paroi.

Le premier bossage 15 est avantageusement réalisé dans une pièce 7 plastique indépendante, illustrée isolément sur les figures 7A et 7B, rapportée dans une ouverture 17 de la paroi externe du relief de centrage 11, la pièce 7 comprenant une découpe 71 en forme de U autour de la languette 70 ainsi que des clips 72 de fixation assurant un montage aisé de la pièce 7 dans l'ouverture 17 par emboitage élastique.

A titre d'exemple, les ouvertures 23 de la jupe périphérique 22 présentent la forme d'une fente s'étendant horizontalement sur une largeur de l'ordre de 35 mm et sur une hauteur de l'ordre de 5 mm, les premier et deuxième bossages 15, 16 présentant la forme d'un bourrelet présentant une largeur et une longueur adaptées pour s'introduire dans les ouvertures 23 de la jupe périphérique 22 du récipient 2, le bourrelet présentant avantageusement une épaisseur de l'ordre 1,5 mm et une section transversale sensiblement triangulaire.

L'appareil électroménager ainsi réalisé présente l'avantage de procurer une grande ergonomie d'utilisation.

En effet, lorsque l'utilisateur souhaite mettre en place le récipient 2 sur le boîtier 1, il lui suffit d'amener l'embase 21 sur le socle de réception du boîtier 1 et de l'orienter selon l'une quelconque des quatre orientations autorisant l'engagement de la jupe périphérique 22 de forme carrée sur les deux reliefs de centrage 11. Le récipient 2 peut alors être verrouillé sur le boîtier 1 en exerçant une simple pression vers le bas afin d'emboiter la jupe périphérique 22 sur les reliefs de centrage 11 et d'amener les premier et deuxième bossages 15, 16 dans les ouvertures 23 de la jupe périphérique 22, cet engagement des premier et deuxième bossages 15, 16 dans les ouvertures 23 de la jupe périphérique 22 présentant l'avantage d'être parfaitement visible par l'utilisateur de sorte que ce dernier est visuellement informé du bon maintien du récipient 2 sur le boîtier 1, améliorant ainsi la sécurité et l'ergonomie d'utilisation de l'appareil.

Lors de cet emboitement, la commande de sécurité 6 se trouvant à proximité du deuxième bossage 16 se trouve activée par l'une des cames 24A de la couronne 24 du récipient, et le deuxième bossage 16 se trouve engagé fermement dans l'ouverture 23 grâce à la forte résistance à la déformation exercée par la paroi externe du relief de centrage 11 situé le long de la face avant du boîtier, tandis que l'engagement du premier bossage 15 s'effectue avec plus d'aisance du fait de la présence de la languette 70 prévue pour se déformer élastiquement.

On obtient ainsi un récipient 2 qui est plus fermement maintenu du côté de la face avant du boîtier 1 de l'appareil, où s'exerce la poussée du ressort 60 de la commande de sécurité 6, assurant ainsi un excellent maintien et un excellent positionnement du récipient 2 sur le boîtier 1 malgré la présence de la commande de sécurité 6. De plus, l'absence de découpe au voisinage du deuxième bossage 16 présente également l'avantage de ne pas dégrader l'esthétique de la face avant du boîtier 1.

Lors du fonctionnement de l'appareil, les ouvertures 23 de la jupe périphérique ne recevant pas les premier et deuxième bossages 15, 16 présentent, quant à elles, l'avantage de se trouver en regard de l'espace 12 ménagé entre les deux extrémités longitudinales des reliefs de centrage 11. Ceci permet d'établir un flux d'air entre la cavité recevant l'entraîneur et l'extérieur du récipient, ainsi que cela est illustré par les flèches F sur la figure 1, permettant d'améliorer le refroidissement du moteur, la paroi supérieure du boîtier 1 comportant des fentes d'aération 18, visibles sur la figure 6, disposées sous un disque de protection 13A solidaire de l'entraîneur 13, et le fond du boîtier 1 comportant une grille d'aération 19 permettant le passage d'un flux d'air à l'intérieur du boîtier 1 moteur, illustré par les flèches F, puis en direction de la cavité recevant l'entraineur 13.

Enfin, un tel récipient présente également l'avantage de pouvoir être très facilement retiré du socle en soulevant simplement le récipient de telle sorte que la languette supportant le premier bossage se déforme élastiquement et laisse sortir le premier bossage de l'ouverture, permettant ainsi un léger basculement du récipient vers l'avant de l'appareil et le désengagement du deuxième bossage.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, l'embase du récipient et le socle de réception du boîtier pourront ne pas avoir une section transversale sensiblement carrée mais présenter la forme d'un polygone régulier, tel un triangle, un pentagone, un hexagone...

Ainsi, dans une variante de réalisation non représentée, le boîtier pourra comporter un seul relief de centrage s'étendant sur toute la périphérie du socle, le relief de centrage comportant une lumière venant en regard des ouvertures de la jupe périphérique du récipient ne recevant pas les bossages de maintien lorsque le récipient est disposé sur le boîtier, afin de permettre la circulation d'un flux d'air.

Ainsi, dans une autre variante de réalisation, l'outil de travail pourra être monté sur une embase amovible de l'enveloppe du récipient.

Ainsi dans une variante de réalisation, le récipient de type mélangeur illustré dans le mode de réalisation décrit pourra être remplacé par tout type de récipient utilisable en tant qu'accessoire sur un boitier moteur, tel qu'un récipient de type mini-hachoir, ou un récipient renfermant un outil de type centrifugeuse, ce récipient pouvant comporter un robinet ou une goulotte latérale pour l'évacuation vers un second récipient disposé en bordure du boîtier moteur.

## Revendications

1. Appareil électroménager de préparation culinaire comportant un boîtier (1) renfermant un moteur (5) et un récipient (2) amovible pouvant être disposé sur le boîtier (1) par un simple mouvement de translation verticale, le récipient (2) comprenant un outil de travail (4) destiné à être entraîné en rotation par ledit moteur (5) et comportant une embase (21) comprenant une jupe périphérique (22) venant s'emboîter sur un ou plusieurs reliefs de centrage (11) ménagés sur le boîtier (1), **caractérisé en ce que** ledit boîtier (1) comporte au moins un bossage (15, 16) de maintien ménagé sur une paroi externe d'un des reliefs de centrage (11), le bossage (15, 16) venant s'engager dans une ouverture (23) ménagée sur la jupe périphérique (22) de l'embase (21) pour immobiliser le récipient (2) en position sur le boîtier (1) selon la direction verticale d'engagement.

2. Appareil électroménager selon la revendication 1, **caractérisé en ce que** lesdits reliefs de centrage (11) comportent un premier bossage (15) et un deuxième bossage (16) de maintien disposés sur deux faces distinctes du boîtier (1), les premier et deuxième bossages (15, 16) venant s'engager dans des ouvertures (23) correspondantes de la jupe périphérique (22) de l'embase (21) du récipient (2).

3. Appareil électroménager selon la revendication 2, **caractérisé en ce que** le premier bossage (15) est porté par une languette (70) prévue pour se déformer élastiquement lorsqu'une pression est exercée sur le premier bossage (15).

4. Appareil électroménager selon la revendication 3, **caractérisé en ce que** la languette (70) élastique est réalisée dans une pièce (7) qui est rapportée dans une ouverture (17) de la paroi externe du relief de centrage (11).

5. Appareil électroménager selon l'une quelconque des revendications 2 à 4, **caractérisé en ce que** le deuxième bossage (16) est porté par une paroi présentant une plus grande rigidité que la languette (70) supportant le premier bossage (15).

6. Appareil électroménager selon la revendication 5, **caractérisé en ce que** le deuxième bossage (16) est réalisé directement sur la paroi externe du relief de centrage (11), cette dernière étant dépourvue de découpe pour faciliter la déformation élastique de la paroi.

7. Appareil électroménager selon l'une quelconque des revendications 5 à 6, **caractérisé en ce que** le boîtier (1) comporte une commande de sécurité (6) qui est ramenée dans une position de repos par des moyens de rappel (60), la commande de sécurité (6) étant disposée plus près du deuxième bossage (16) que du premier bossage (15).

8. Appareil électroménager selon l'une quelconque des revendications 2 à 7, **caractérisé en ce que** le premier bossage (15) est porté par une face externe d'un relief de centrage (11) s'étendant le long de la face arrière du boîtier (1) et le deuxième bossage (16) est porté par une face externe d'un relief de centrage (11) s'étendant le long de la face avant du boîtier (1), les faces externes des reliefs de centrage (11) venant s'emboîter dans la jupe périphérique (22) de l'embase (21) du récipient (2) lorsque le récipient (2) est disposé sur le boîtier (1).

9. Appareil électroménager selon l'une quelconque des revendications 1 à 8, **caractérisé en ce que** le récipient (2) peut être disposé sur le boîtier (1) selon plusieurs orientations prédéterminées.

10. Appareil électroménager selon la revendication 9, **caractérisé en ce que** ladite jupe périphérique (22) comporte un nombre d'ouvertures (23) supérieur au nombre de bossages (15,16), les ouvertures (23) de la jupe périphérique (22) venant soit en regard du bossage (15, 16), soit en regard d'un passage (12) pour la circulation d'air, lorsque le récipient (2) est disposé sur le boîtier (1) selon l'une quelconque des orientations permises par les reliefs de centrage (11).

11. Appareil électroménager selon la revendication 10, **caractérisé en ce que** le passage pour la circulation de l'air est constitué par un espace (12) ménagé entre les reliefs de centrage (11).

12. Appareil électroménager selon l'une quelconque des revendications 9 à 11, **caractérisé en ce que** l'embase (21) du récipient (2) présente une section transversale sensiblement carrée, ladite embase (21) pouvant être disposée sur le boîtier (1) selon quatre orientations distinctes décalées l'une par rapport à l'autre de 90°.

13. Appareil électroménager selon la revendication 12, **caractérisé en ce que** l'embase (21) comporte une ouverture (23) sur chacune des quatre faces de la jupe périphérique (22), deux des ouvertures (23) recevant les premier et deuxième bossages (15, 16) lorsque le récipient (2) est disposé sur le boîtier (1), les deux autres ouvertures (23) venant en regard d'un espace (12) ménagé entre les deux reliefs de centrage (11) pour permettre la circulation d'un flux d'air contribuant au refroidissement du moteur (5).

14. Appareil électroménager selon l'une quelconque des revendications 1 à 13, **caractérisé en ce que** les ouvertures (23) présentent la forme d'une fente et **en ce que** le bossage (15, 16) présente la forme d'un bourrelet possédant une forme adaptée pour s'introduire dans les ouvertures (23).

## Patentansprüche

1. Elektrohaushaltsgerät zur Zubereitung von Speisen mit einem Gehäuse (1), in dem ein Motor (5) untergebracht ist, und einem abnehmbaren Behälter (2), der durch eine einfache vertikale Translationsbewegung auf dem Gehäuse (1) angeordnet werden kann, wobei der Behälter (2) ein Arbeitswerkzeug (4), das durch den Motor (5) in Drehbewegung versetzt wird, sowie einen Sockel (21) mit einer umlaufenden Schürze (22) umfasst, die sich auf ein oder mehrere Zentrierreliefs (11) setzen lässt, die auf dem Gehäuse (1) angeordnet sind, **dadurch gekennzeichnet, dass** das Gehäuse (1) mindestens einen Haltevorsprung (15, 16) umfasst, der an einer Außenwand eines der Zentrierreliefs (11) angeordnet ist, wobei der Vorsprung (15, 16) in eine Öffnung (23) einrastet, die in der umlaufenden Schürze (22) des Sockels (21) ausgebildet ist, um den Behälter (2) auf dem Gehäuse (1) entsprechend der vertikalen Einsetzrichtung zu fixieren.

2. Elektrohaushaltsgerät nach Anspruch 1, **dadurch gekennzeichnet, dass** die Zentrierreliefs (11) einen ersten Haltevorsprung (15) und einen zweiten Haltevorsprung (16) umfassen, die an zwei verschiedenen Seiten des Gehäuses (1) angeordnet sind, wobei der erste und der zweite Vorsprung (15, 16) in die entsprechenden Öffnungen (23) der umlaufenden Schürze (22) des Sockels (21) des Behälters (2) einrasten.

3. Elektrohaushaltsgerät nach Anspruch 2, **dadurch gekennzeichnet, dass** der erste Vorsprung (15) von einer Lasche (70) getragen wird, die sich elastisch verformt, wenn auf den ersten Vorsprung (15) Druck ausgeübt wird.

4. Elektrohaushaltsgerät nach Anspruch 3, **dadurch gekennzeichnet, dass** die elastische Lasche (70) in einem Teil (7) ausgebildet ist, das in eine Öffnung (17) der Außenwand des Zentrierreliefs (11) eingesetzt ist.

5. Elektrohaushaltsgerät nach einem der Ansprüche 2 bis 4, **dadurch gekennzeichnet, dass** der zweite Vorsprung (16) von einer Wand getragen wird, die eine höhere Festigkeit als die Lasche (70) aufweist, die den ersten Vorsprung (15) trägt.

6. Elektrohaushaltsgerät nach Anspruch 5, **dadurch gekennzeichnet, dass** der zweite Vorsprung (16) direkt an der Außenwand des Zentrierreliefs (11) ausgebildet ist, wobei letzteres keinen Ausschnitt aufweist, um die elastische Verformung der Wand zu erleichtern.

7. Haushaltsgerät nach einem der Ansprüche 5 bis 6, **dadurch gekennzeichnet, dass** das Gehäuse (1) ein Sicherheitselement (6) umfasst, das durch Rückstellmittel (60) in eine Ruhestellung gebracht wird, wobei das Sicherheitselement (6) näher am zweiten Vorsprung (16) als am ersten Vorsprung (15) angeordnet ist.

8. Elektrohaushaltsgerät nach einem der Ansprüche 2 bis 7, **dadurch gekennzeichnet, dass** der erste Vorsprung (15) von einer Außenseite eines Zentrierreliefs (11) getragen wird, das sich entlang der Rückseite des Gehäuses (1) erstreckt, und dass der zweite Vorsprung (16) von einer Außenseite des Zentrierreliefs (11) getragen wird, das sich entlang der Vorderseite des Gehäuses (1) erstreckt, wobei die Außenseiten der Zentrierreliefs (11) mit der umlaufende Schürze (22) des Sockels (21) des Behälters (2) in Eingriff kommen, wenn der Behälter (2) auf dem Gehäuse (1) angeordnet wird.

9. Elektrohaushaltsgerät nach einem der Ansprüche 1 bis 8, **dadurch gekennzeichnet, dass** der Behälter (2) entsprechend mehrerer vorbestimmter Ausrichtungen auf dem Gehäuse (1) angeordnet werden kann.

10. Elektrohaushaltsgerät nach Anspruch 9, **dadurch gekennzeichnet, dass** die umlaufende Schürze (22) eine Anzahl von Öffnungen (23) umfasst, die größer ist als die Anzahl der Vorsprünge (15, 16), wobei die Öffnungen (23) der umlaufenden Schürze (22) sich entweder gegenüber dem Vorsprung (15, 16) oder gegenüber einem Durchlass (12) zur Luftzirkulation befinden, wenn der Behälter (2) entsprechend einer der durch die Zentrierreliefs (11) gestatteten Ausrichtungen auf dem Gehäuse (1) angeordnet ist.

11. Elektrohaushaltsgerät nach Anspruch 10, **dadurch gekennzeichnet, dass** der Durchlass zur Luftzirkulation aus einer Lücke (12) besteht, die zwischen den Zentrierreliefs (11) gebildet ist.

12. Elektrohaushaltsgerät nach einem der Ansprüche 9 bis 11, **dadurch gekennzeichnet, dass** der Sockel (21) des Behälters (2) einen im wesentlichen quadratischen Querschnitt aufweist, wobei der Sockel (21) entsprechend vier verschiedenen Ausrichtungen, die um 90° zueinander versetzt sind, auf dem Gehäuse (1) angeordnet werden kann.

13. Elektrohaushaltsgerät nach Anspruch 12, **dadurch gekennzeichnet, dass** der Sockel (21) eine Öffnung (23) auf jeder der vier Seiten der umlaufenden Schürze (22) aufweist, wobei zwei der Öffnungen (23) den ersten und den zweiten Vorsprung (15, 16) aufnehmen, wenn der Behälter (2) auf dem Gehäuse (1) angeordnet ist, wobei die beiden anderen Öffnungen (23) sich gegenüber einer Lücke (12) befinden, die zwischen den beiden Zentrierreliefs (11) gebildet ist, um die Zirkulation eines Luftstroms zu ermöglichen, der zur Kühlung des Motors (5) beiträgt.

14. Elektrohaushaltsgerät nach einem der Ansprüche 1 bis 13, **dadurch gekennzeichnet, dass** die Öffnungen (23) die Form eines Schlitzes aufweisen und dass der Vorsprung (15, 16) die Form eines Wulstes aufweist, dessen Form derart angepasst ist, dass er sich in die Öffnungen (23) einführen lässt.

## Claims

1. Food preparation household electrical appliance comprising a housing (1) containing a motor (5) and a removable container (2) that can be arranged on the housing (1) by a simple vertical translation movement, the container (2) comprising a working tool (4) intended to be rotated by said motor (5) and having a base (21) comprising a peripheral skirt (22) engaging on one or more centring projections (11) provided on the housing (1), **characterised in that** said housing (1) comprises at least one support boss (15, 16) formed on an outer wall of one of the centring projections (11), the boss (15, 16) engaging in an opening (23) formed on the peripheral skirt (22) of the base (21) to fix the container (2) in position on the housing (1) along the vertical direction of engagement.

2. Household electrical appliance according to claim 1, **characterised in that** said centring projections (11) comprise a first support boss (15) and a second support boss (16) arranged on two separate faces of the housing (1), the first and second bosses (15, 16) engaging in corresponding openings (23) of the peripheral skirt (22) of the base (21) of the container (2).

3. Household electrical appliance according to claim 2, **characterised in that** the first boss (15) is supported by a tab (70) designed to deform elastically when pressure is exerted on the first boss (15).

4. Household electrical appliance according to claim 3, **characterised in that** the elastic tab (70) is located in a part (7) which is attached in an opening (17) of the outer wall of the centring projection (11).

5. Household electrical appliance according to any one of claims 2 to 4, **characterised in that** the second boss (16) is carried by a wall of higher rigidity than the tab (70) supporting the first boss (15).

6. Household electrical appliance according to claim 5, **characterised in that** the second boss (16) is formed directly on the outer wall of the centring projection (11), the latter having no cutouts in order to facilitate the elastic deformation of the wall.

7. Household electrical appliance according to any one of claims 5 to 6, **characterised in that** the housing (1) comprises a safety control (6) which is returned to a rest position by return means (60), the safety control (6) being arranged closer to the second boss (16) than the first boss (15).

8. Household electrical appliance according to any one of claims 2 to 7, **characterised in that** the first boss (15) is supported by an outer face of a centring projection (11) extending along the rear face of the housing (1) and the second boss (16) is supported by an outer face of a centring projection (11) extending along the front face of the housing (1), the outer faces of the centring projections (11) fitting into the peripheral skirt (22) of the base (21) of the container (2) when the container (2) is arranged on the housing (1).

9. Household electrical appliance according to any one of claims 1 to 8, **characterised in that** the container (2) can be arranged on the housing (1) according to several predetermined orientations.

10. Household electrical appliance according to claim 9, **characterised in that** said peripheral skirt (22) comprises a number of openings (23) greater than the number of bosses (15, 16), the openings (23) of the peripheral skirt (22) being either opposite the boss (15, 16) or opposite a passage (12) for the circulation of air, when the container (2) is arranged on the housing (1) according to any one of the orientations allowed by the centring projections (11).

11. Household electrical appliance according to claim 10, **characterised in that** the passage for the circulation of air consists of a space (12) formed between the centring projections (11).

12. Household electrical appliance according to any one of claims 9 to 11, **characterised in that** the base (21) of the container (2) has a distinctly square cross-section, it being possible to arrange said base (21) on the housing (1) according to four separate orientations offset 90° with respect to each other.

13. Household electrical appliance according to claim 12, **characterised in that** the base (21) has an opening (23) on each of the four faces of the peripheral skirt (22), two of the openings (23) receiving the first and second bosses (15, 16) when the container (2) is arranged on the housing (1), the other two openings (23) being opposite a space (12) formed between the two centring projections (11) to allow the circulation of an air flow helping to cool the motor (5).

14. Household electrical appliance according to any one of claims 1 to 13, **characterised in that** the openings (23) have the shape of a slot and **in that** the boss (15, 16) has the shape of a bead adapted to enter the openings (23).
